# EUROPÄISCHE PATENTSCHRIFT

(11) **EP 3 039 692 B1**
(45) Veröffentlichungstag und Bekanntmachung des Hinweises auf die Patenterteilung: **20.12.2017**
(21) Anmeldenummer: 14744541.5
(22) Anmeldetag: 28.07.2014
(51) Int. Cl.: H01F 7/16, F16H 59/02, H01F 7/18

(54) **MAGNETVORRICHTUNG ZUR ARRETIERUNG EINES GANGWAHLHEBELS EINES FAHRZEUGS IN EINER VORBESTIMMTEN POSITION, VERFAHREN ZUR HERSTELLUNG EINER MAGNETVORRICHTUNG UND VERFAHREN ZUM BETREIBEN EINER MAGNETVORRICHTUNG**
MAGNET DEVICE FOR LOCKING A GEAR SELECTOR LEVER OF A VEHICLE IN A PRE-DETERMINED POSITION, METHOD FOR PRODUCING A MAGNET DEVICE, AND METHOD FOR OPERATING A MAGNET DEVICE
DISPOSITIF MAGNÉTIQUE POUR BLOQUER UN LEVIER DE SÉLECTION DE VITESSE D'UN VÉHICULE DANS UNE POSITION PRÉDÉTERMINÉE, PROCÉDÉ DE PRODUCTION D'UN DISPOSITIF MAGNÉTIQUE ET PROCÉDÉ POUR FAIRE FONCTIONNER UN DISPOSITIF MAGNÉTIQUE

(30) Priorität: 27.08.2013 DE 102013217048
(43) Veröffentlichungstag der Anmeldung: 06.07.2016
(73) Patentinhaber: ZF Friedrichshafen AG, 88046 Friedrichshafen (DE)
(72) Erfinder: SPRATTE, Joachim, 49090 Osnabrueck (DE); SANDER, Thorsten, 32369 Rahden (DE)
(86) Internationale Anmeldenummer: PCT/EP2014/066126
(87) Internationale Veröffentlichungsnummer: WO 2015/028219

(56) Entgegenhaltungen:
- EP-A1- 0 576 813
- DE-A1-102007 058 823
- DE-A1-102009 042 777
- DE-A1-102010 039 584
- US-A1- 2010 156 582
- US-A1- 2012 090 951

## Beschreibung

Die vorliegende Erfindung bezieht sich auf eine Magnetvorrichtung zur Arretierung eines Gangwahlhebels eines Fahrzeugs in einer vorbestimmten Position, auf ein Verfahren zur Herstellung der Magnetvorrichtung und ein Verfahren zum Betreiben der Magnetvorrichtung gemäß den Hauptansprüchen.

Magnetvorrichtungen wie beispielsweise Shiftlock-Magnete für Getriebeschaltungen werden heute als Hubmagnete in konventioneller Bauform ausgeführt. In der Regel besitzt ein solcher Shiftlock-Magnet vier Elementar-Funktionen:
- stromloses Verriegeln in der Wählhebelposition "P"
- strombeaufschlagtes Enterriegeln aus der Wählhebelposition "P"
- strombeaufschlagtes Verriegeln in der Wählhebelposition "N"
- stromloses Entriegeln in der Wählhebelposition "N"

In diesen Positionen sollten über den Stößel (auch als Anker bezeichnet) Betätigungs- und Missbrauchskräfte abgestützt werden. Des Weiteren sollte der Magnet nahezu geräuschlos arbeiten. Der Hub des Magneten beträgt üblicherweise ca. 6,5mm. Der Magnet (synonym auch als Magnetvorrichtung bezeichnet) wird üblicherweise auf 100% Einschaltdauer ausgelegt und geschaltet betrieben. Die Herausforderung des heutigen Designs besteht darin, über den recht langen Betätigungsweg geräuscharm zu bleiben und die Abstützkräfte dennoch abzustützen.

Das heutige konventionelle Design einer solchen Magnetvorrichtung löst dies in der Form, dass ein massiver Metallkäfig als Magnetjoch verwendet wird, in das Bronzebuchsen eingesetzt werden, um die Reibung und die Betätigungsgeräusche zu minimieren. Zur Dämpfung der Endlagengeräusche sind auf den Anker "Dämpfergummis" montiert. Magnetisch ist der Magnet in der Form ausgeführt, dass anfangs eine recht hohe Zugkraft vorliegt und der Magnet in der Endlage "ins Leere" läuft. Das heißt, dass ein magnetischer Kreis zum Ende hin wieder geöffnet wird. Die Rückstellung und die Verriegelung in Schaltstellung "P" erfolgen über eine Rückstellfeder. Im inneren Durchmesser des Ankers ist ein Stößel aus Edelstahl montiert, der in die Verriegelungsbuchsen des Gegenstückes eintaucht.

In der Wählhebelposition "P" sollte im Fahrzeug eine Spule freigegeben werden, die den Abzug des Zündschlüssels ermöglicht. Dies wird üblicherweise mit einem Mikroschalter gelöst, der durch ein Rastierelement in der Position "P" geöffnet wird.

Ein solcher Aufbau einer Magnetvorrichtung erweist sich jedoch in einigen Aspekten als ungünstig. Insbesondere lässt sich in Bezug auf den Elektromagneten (auch als E-Magnet bezeichnet) anmerken, dass die massive Ausführung des Magnetjochs zwar die Abstützung der Missbrauchskräfte und die Abfuhr der entstehenden Wärme ermöglicht; sie verursacht jedoch hohe Werkzeug- und Montageaufwände. Der Abriss des magnetischen Flusses in der Endlage verursacht zum einen recht hohe Toleranzen der Endlage. Es verlangt aber auch eine Dauerbestromung in der Endlage mit dem Betätigungsstrom. Dies wiederum führt zu einer hohen Eigenerwärmung des Magneten, was wiederum zu einer recht hohen Eigenerwärmung des Wählhebels führt und eine Verschiebung der Wärmespezifikation der (Wählhebel-) Baugruppe hin zu 125°C verursacht. Die Integration einer Endlagendämpfung in dem Magnetkreis verursacht eine Vergrößerung des Ankerdurchmessers. Des Weiteren wird hierdurch die Gestaltungsfreiheit des Magnetkreises eingeschränkt. Der größere Durchmesser des Ankers erhöht auch die Masse des Ankers. Hierdurch wird auch die kinetische Energie zur Bewegung des Ankers erhöht, der in der Endlage abgebremst werden muss. Dies erhöht die Aufwände und Toleranzen in der Endlagendämpfung. Die oben beschriebenen Aufgaben des E-Magneten bedingen eine recht große Kupferspule. Der Preis von Kupfer ist in den letzten und diesem Jahr deutlich gestiegen. Dies treibt den Preis des Magneten sichtbar. In Bezug auf einen Mikroschalter lässt sich anmerken, dass die Detektion der Position "P" am Rastierelement indirekt ausgeführt ist. Durch die bei einigen Applikationen regionale Entfernung des Magneten zur Leiterplatte mit einer Steuerelektronik ist ein separater Kabelbaum je für Magnet und Mikroschalter erforderlich. Der Mikroschalter ist in der Regel ein deutlich sichtbarer Posten in der "Bill of Material" (= Teileliste).

Die US Patentschriften US2010/0156582 A1 und US2012/0090951 A1 offenbaren Magnetvorrichtungen für Parksperren, die jeweils eine Spule und eine außerhalb der Spule positionierten Feder aufweisen. Die Europäische Patentanmeldung EP0576813 A1, offenbart ein Elektromagnet mit einem Anker, wobei die Stange des Ankers aus Kunststoff besteht. DE 10 2009 042777 A1 offenbart eine Magnetvorrichtung mit einer Spule, einem bewegbaren Anker und einer Messvorrichtung zur Bestimmung einer Ankerposition. Vor diesem Hintergrund schafft die vorliegende Erfindung eine verbesserte Magnetvorrichtung, ein verbessertes Verfahren zur Herstellung der Magnetvorrichtung sowie ein verbessertes Verfahren zum Betreiben der Magnetvorrichtung gemäß den Hauptansprüchen. Vorteilhafte Ausgestaltungen ergeben sich aus den Unteransprüchen und der nachfolgenden Beschreibung.

Die vorliegende Erfindung schafft eine Magnetvorrichtung zur Arretierung eines Gangwahlhebels eines Fahrzeugs in einer vorbestimmten Position gemäß Anspruch 1. Unter einer Spule kann ein Paket mit einem gewickelten metallischen Draht verstanden werden, das eine Öffnung aufweist, in welches ein bewegliches Ankerelement eingeführt werden kann. Eine Spule stellt somit bei der Beaufschlagung mit einem Strom einen Elektromagneten dar. Unterer einem Ankerelement kann ein stabförmiges Element verstanden werden, welches zumindest einen Teil aufweist, der einen metallischen, magnetischen oder magnetisierbaren Kern umfasst, welcher in die Spule bzw. eine Öffnung der Spule eintauchen kann. Das Ankerelement kann auch aus mehreren Teilelementen zusammengesetzt sein. Unter einer Feder kann ein elastisch verformbares Element verstanden werden, welches auf eine Aktivierungskraft mit einer Aktivierungsverformung reagiert und sich bei einem Wegfall der Aktivierungskraft in diese ursprüngliche Lage bewegt.

Die vorliegende Erfindung basiert auf der Erkenntnis, dass durch die Anordnung der Feder außerhalb der Spule eine Möglichkeit geschaffen werden kann, um eine sehr kompakte Bauform der Spule zu erreichen und dennoch eine ausreichende Rückstellmöglichkeit für das Ankerelement sicherzustellen. Hierdurch bietet sich der Vorteil, die Spule mit einem geringeren Materialaufwand herstellen zu können, wodurch sich einerseits sie Herstellungskosten als auch das resultierende Gewicht und andererseits der für den Einbau der Magnetvorrichtung erforderliche Bauraum gering halten lassen.

Gemäß einer besonderen Ausführungsform der vorliegenden Erfindung kann die Feder eine Kegel- oder Ringfeder sein, wobei die Feder das Ankerelement zumindest teilweise umfasst. Eine solche Ausführungsform der vorliegenden Erfindung bietet den Vorteil einer sehr gleichmäßigen Kraftausübung von der Feder auf das Ankerelement, sodass ein Verkanten des Ankerelementes während einer Bewegung weitgehend verhindert wird.

Um eine besonders leichte Magnetvorrichtung zu schaffen, die möglichst wenige metallische und somit schwere Komponenten aufweist, kann gemäß einer Ausführungsform der vorliegenden Erfindung das Ankerelement einen zumindest teilweise in der Spule beweglichen metallischen, magnetischen und/oder magnetisierbaren Kern und einen an dem Kern befestigten Stößel aufweisen, der ein anderes Material als der Kern aufweist, insbesondere der ein Kunststoffmaterial aufweist.

Ein hoher Verschleiß oder eine Beschädigung beim Betrieb der Magnetvorrichtung kann dadurch reduziert oder verhindert werden, wenn gemäß einer Ausführungsform der vorliegenden Erfindung ein der Spule angewandtes Ende der Feder an einem Vorsprung des Ankerelementes abgestützt ist, wobei ein Dämpfungselement zwischen dem Vorsprung und der Spule angeordnet ist. Hierdurch wird die Materialbelastung des Ankerelements im Betrieb der Magnetvorrichtung reduziert und somit die Lebensdauer der Magnetvorrichtung vorteilhaft verlängert.

Gemäß einer weiteren Ausführungsform der vorliegenden Erfindung kann ein Dämpfungsglied vorgesehen sein, wobei das Dämpfungsglied auf einer der Spule gegenüberliegenden Seite der Feder angeordnet ist. Eine solche Ausführungsform der vorliegenden Erfindung bietet den Vorteil, dass auch beim Zurückdrücken des Ankerelements durch die Feder harte Stöße vermieden werden können. Hierdurch wird die Materialbelastung des Ankerelements im Betrieb der Magnetvorrichtung reduziert und somit die Lebensdauer der Magnetvorrichtung vorteilhaft verlängert.

Günstig ist weiter eine Ausführungsform der vorliegenden Erfindung, bei der das Dämpfungselement eine Öffnung mit einem Innendurchmesser aufweist, die einem Außendurchmesser des Dämpfungsgliedes entspricht, oder wobei das Dämpfungsglied eine Öffnung mit einem Innendurchmesser aufweist, die einem Außendurchmesser des Dämpfungselementes entspricht. Eine solche Ausführungsform der vorliegenden Erfindung bietet den Vorteil einer besonders hohen Materialersparnis, da beim Herstellen des Dämpfungselements und des Dämpfungsglieds eines der beiden Komponenten aus einem Abfallprodukt der Herstellung der anderen Komponente hergestellt werden kann.

Eine besonders präzise Position des Ankerelementes kann beim Einziehen desselben in die Spule dann erreicht werden, wenn ein Anschlagelement vorgesehen ist, welches an einer der Feder gegenüberliegenden Seite der Spule angeordnet ist, wobei das Anschlagelement ausgebildet ist, um einen Bewegungsweg des Ankerelementes durch die Spule zu begrenzen. In diesem Fall kann sichergestellt werden, dass das Ankerelement die durch das Anschlagelement präzise definierte Position des Ankerelementes in der Spule auch bei einer Aktivierung der Spule mit einem reduzierten Spulenstrom einnimmt. Dies führt wiederum zu einer Reduktion des für die Aktivierung erforderlichen Stromflusses durch die Spule, sodass im Betrieb der Magnetvorrichtung eine Reduktion einer thermischen Belastung der Magnetvorrichtung resultiert. Schließlich kann durch eine solche Ausführungsform der vorliegenden Erfindung eine "Peek and Hold"-Funktion der Magnetvorrichtung realisiert werden.

Eine besonders große Anschlagfläche und somit ein besonders sicherer Sitz des Ankerelementes in einer gewünschten Position in der Spule kann dadurch erreichen werden, dass gemäß einer günstigen Ausführungsform der vorliegenden Erfindung das Ankerelement eine konische Form aufweist und das Anschlagelement eine der konischen Form des Ankerelementes entsprechende konische Form aufweist.

Gemäß einer weiteren Ausführungsform der vorliegenden Erfindung kann die Spule zumindest teilweise von einem U-förmigen Joch umgeben sein, insbesondere wobei das Joch zumindest teilweise aus einem Metallblech gefertigt ist. Eine solche Ausführungsform der vorliegenden Erfindung bietet den Vorteil eines besonders geringen Gewichts und der Verwendung von kostengünstigen da kleinen Komponenten aufweisen. In der Magnetvorrichtung der Erfindung gemäß Anspruch 1 ist ein Schaltelement vorgesehen, das ausgebildet ist, um mit einem an einer Bewegungsschiene angeordneten Positionselement und dem Ankerelement zusammenzuwirken, um eine Position der Magnetvorrichtung in der Bewegungsschiene zu erfassen. Unter einer Bewegungsschiene ist eine Führungsschiene zu verstehen, welche zur Führung einer Bewegung der Magnetvorrichtung vorgesehen ist. Dabei kann die Bewegungsschiene außerhalb der Magnetvorrichtung angeordnet sein und beispielsweise zumindest einen Vorsprung, eine Positionserkennungsnase, eine Aussparung und/oder eine Buchse (beispielsweise eine metallische Buchse) aufweisen, um definierte Position in der Magnetvorrichtung in oder an der Bewegungsschiene erkennbar zu machen. Eine solche Ausführungsform der vorliegenden Erfindung bietet den Vorteil einer Möglichkeit zur präzisen Erkennung des Erreichens einer gewünschten Lage der Magnetvorrichtung, sodass eine Aktivierung der Spule bzw. des Aktivierungsstroms durch die Spule an einer gewünschten Position fehlerfrei und präzise erfolgen kann. Weiterhin bietet eine solche Ausführungsform der vorliegenden Erfindung den Vorteil, dass durch das Anordnen des Schaltelements an der Magnetvorrichtung ein Aufwand für die Verkabelung eines die Position der Magnetvorrichtung erfassenden Sensors deutlich reduziert werden kann, da nun eine Leitung zur Übertragung eines Signals von dem Schaltelement beispielsweise zusammen mit Leitungen zu Übertragung eines Aktivierungsstroms für die Spule zusammengefasst werden kann. Eine separate Leitung zu einem extern der Magnetvorrichtung positionierten Schaltelement kann somit vermieden werden, wodurch sich Herstellungskosten reduzieren lassen. Beispielsweise kann auch ein kostengünstig zur Verfügung stehendes Stanzgitter zur Realisierung der Leitungen in dem Wählhebel verwendet werden.

Besonders vorteilhaft seiner Ausführungsform der vorliegenden Erfindung, bei der das Schaltelement einen Reed-Kontakt und zumindest einen Permanentmagneten aufweist. Eine solche Ausführungsform der vorliegenden Erfindung bietet den Vorteil, dass einerseits ein kontaktloses Erkennen einer bestimmten Position, in der sich die Magnetvorrichtung befindet, möglich ist und andererseits durch die flexible Wahl der magnetischen Stärke des Permanentmagneten auch eine eindeutige und klare Schwellwertentscheidung zur Bestimmung dieser Position verwendet werden kann. Hierdurch kann ein besonders langlebiges Schaltelement hergestellt werden.

Besonders günstig ist eine Ausführungsform der vorliegenden Erfindung, bei der zwischen je einem Ende des Reed-Kontaktes und dem Permanentmagneten ein Flussleitungselement angeordnet ist, insbesondere wobei zumindest ein Flussleitungselement eine dem anderen Flussleitungselement zugewandte Flussleitungsnase aufweist. Durch die Anordnung von solchen Flussleitungselementen, insbesondere der Flussleitungsnasse bietet eine solche Ausführungsform der vorliegenden Erfindung den Vorteil, im Bereich der Flussleitungsnase sehr einfach durch ein Hineinbringen eines weiteren Elementes einen magnetischen Kurzschluss zu bewirken, sodass eine magnetische Flussdichte in diesem Fall am Reed-Kontakt sinkt, wodurch sich dieser Reed-Kontakt öffnet. Hierdurch kann auf technisch sehr einfache und somit kostengünstige Weise eine sehr präzise Erfassung des Elementes in die Nachbarschaft der Flussleitnase erfolgen, was wiederum zu einer präzisen Erfassung der Position der Magnetvorrichtung verwendet werden kann.

Besonders vorteilhaft ist ein Getriebeschalthebel mit einer Magnetvorrichtung gemäß einem hier vorgestellten Ansatz.

Ferner schafft der hier vorgestellte Ansatz ein Verfahren zur Herstellung einer Magnetvorrichtung gemäß Anspruch 13. Ebenso schafft der hier vorgestellte Ansatz ein Verfahren zum Betreiben einer Magnetvorrichtung gemäß Anspruch 14. Auch durch solche hier vorgestellten Verfahren lassen sich die Vorteile des diese Beschreibung zugrunde liegenden Ansatzes einfach und kostengünstig implementieren.

Die Erfindung wird anhand der beigefügten Zeichnungen beispielhaft näher erläutert. Es zeigen:
- Fig. 1: ein Blockschaltbild eines Fahrzeugs mit einem Ausführungsbeispiel der vorliegenden Erfindung als Magnetvorrichtung;
- Fig. 2: eine perspektivische Ansicht eines (Innen-) Teils des Getriebeschalthebels;
- Fig. 3: eine Querschnittsdarstellung durch ein Ausführungsbeispiel der vorliegenden Erfindung als Magnetvorrichtung;
- Fig. 4: eine perspektivische Ansicht von mehreren Komponenten der Magnetvorrichtung gemäß einem Ausführungsbeispiel der vorliegenden Erfindung;
- Fig. 5: eine Darstellung eines Ausführungsbeispiels der Magnetvorrichtung in einer Explosionsdarstellung;
- Fig. 6: eine Darstellung eines Ausführungsbeispiels der vorliegenden Erfindung als Magnetvorrichtung in einer perspektivischen Ansicht;
- Fig. 7: perspektivische Darstellung eines Schaltelements, wie es beispielsweise in einem oberen Gehäuseelement gemäß Fig. 3 verbaut werden kann, zur Verwendung in einem Ausführungsbeispiel der vorliegenden Erfindung;
- Fig. 8A: eine Darstellung eines oberen Gehäuseelements mit einem darin angeordneten Schaltelement zur Verwendung in einem Ausführungsbeispiel der vorliegenden Erfindung;
- Fig. 8B: eine perspektivische Darstellung einer Magnetvorrichtung gemäß einem Ausführungsbeispiel der vorliegenden Erfindung mit einem entfernten oberen Gehäuseelement, jedoch mit dem in diesem Gehäuseelement vorgesehenen Schaltelement;
- Fig. 9: eine Aufsichtdarstellung des Schaltelements zur Verwendung in einem Ausführungsbeispiel der vorliegenden Erfindung, wobei magnetische Flusslinien durch die entsprechenden Komponenten des Schaltelements dargestellt sind;
- Fig. 9B: eine Aufsichtdarstellung des Schaltelements zur Verwendung in einem Ausführungsbeispiel der vorliegenden Erfindung;
- Fig. 10: ein Diagramm zur Erläuterung der Erkennung eines Elementes in einer Position zwischen zwei Flussleitelementen;
- Fig. 11: ein Ablaufdiagramm eines Ausführungsbeispiels der vorliegenden Erfindung als Verfahren; und
- Fig. 12: ein Ablaufdiagramm eines weiteren Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

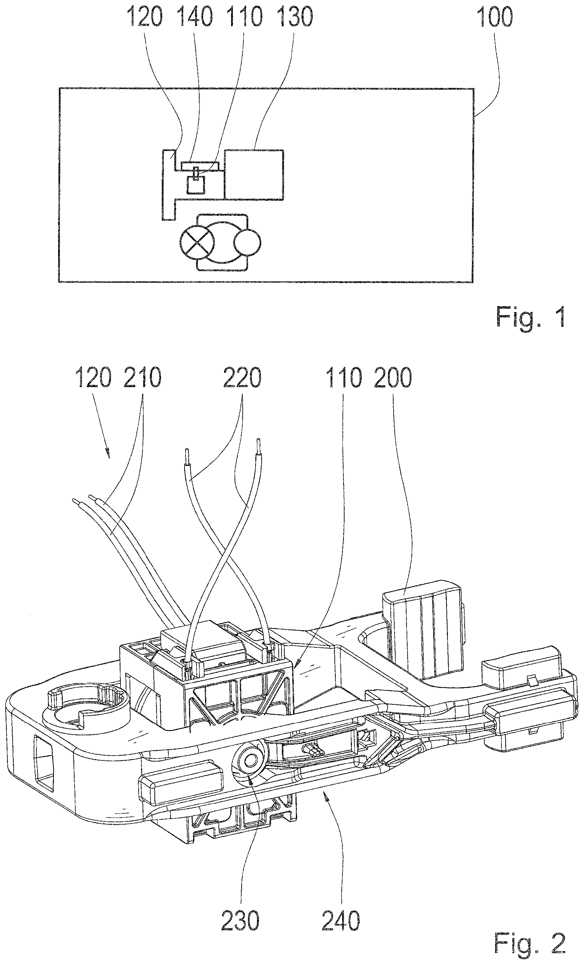

Fig. 1 zeigt ein Blockschaltbild eines Fahrzeugs 100, in welchem ein Ausführungsbeispiel der vorliegenden Erfindung als Magnetvorrichtung 110 verwendet wird. Die Magnetvorrichtung 110 ist dabei Teil eines in der Fig. 1 überproportional dargestellten Getriebeschalthebels 120 eines Automatikgetriebes 130. Die Magnetvorrichtung 110 ist als Shiftlock-Magnet ausgebildet, um in unterschiedlichen Wählhebelpositionen (wie beispielsweise der Parkposition P oder der Neutralposition N) bei einer Beaufschlagung mit Strom eine Bewegung des Getriebeschalthebels 120 in einer Bewegungsschiene 140 zu blockieren bzw. freizugeben (wie dies beispielsweise vorstehend bereits anhand der vier Elementar-Funktionen eines solchen Magneten beschrieben wurde.

Fig. 2 zeigt eine perspektivische Ansicht eines (Innen-) Teils 200 des Getriebeschalthebels 120, in dem eine Magnetvorrichtung gemäß einem Ausführungsbeispiel der vorliegenden Erfindung verbaut ist. Die Magnetvorrichtung 110 ist mit zwei Aktivierungsstromleitungen 210 kontaktiert, welche der nachfolgend noch näher beschriebenen und dargestellten Spule der Magnetvorrichtung 110 einen Aktivierungsstrom zuführen. Ferner sind die zwei Signalleitungen 220 vorgesehen, welche ein Signal eines nachfolgend ebenfalls noch näher beschriebenen und dargestellten Schaltelements der Magnetvorrichtung 110 abführen. Wird nun der Getriebeschalthebel 120 bewegt, wird das in der Fig. 2 dargestellte Teil 200 beispielsweise nach oben oder unten (in Bezug auf die Darstellungsebene der Fig. 2) bewegt. Dabei kann beispielsweise ein Ringeinleger 230 an einem Längsschieber 240 entlang bewegt werden und in einer bestimmten Position des Getriebeschalthebels 120 in einer bestimmten Position relativ zur Magnetvorrichtung 110 angeordnet sein. Diese Position des Ringeinlegers 230 lässt sich dann durch das nachfolgend noch näher beschriebene Schaltelement sehr präzise bestimmen, wodurch auch die Position bzw. Schaltstellung des Getriebeschalthebels 120 eindeutig erfasst werden kann.

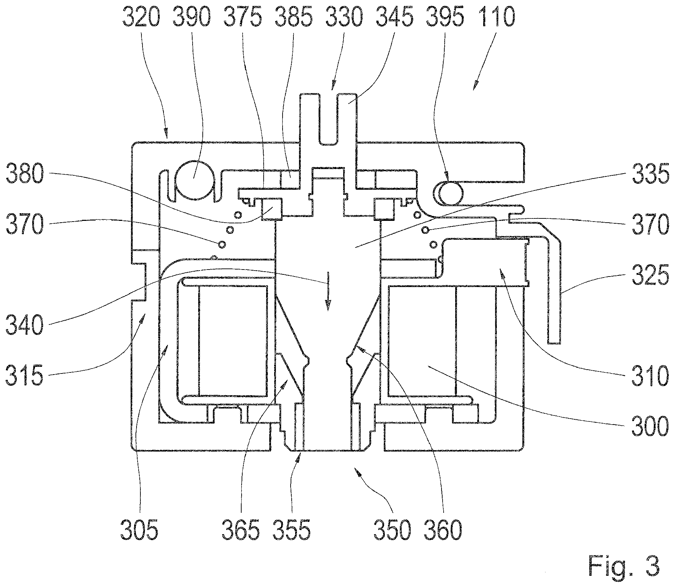

Fig. 3 zeigt eine Querschnittsdarstellung durch ein Ausführungsbeispiel der vorliegenden Erfindung als Magnetvorrichtung 110. Die Magnetvorrichtung 110 umfasst eine Spule 300, die beispielsweise eine Wicklung aus einem Kupferdraht aufweist. Die Spule 300 wird von einem U-förmigen Joch 305 umfasst, welches beispielsweise aus einem Metallblech hergestellt ist. Ferner ist ein Steckanschluss 310 vorgesehen, um die Aktivierungsstromleitungen 210 aus Fig. 2 (welche in der Fig. 3 nicht dargestellt sind) anzuschließen, sodass durch die Spule 300 ein Aktivierungsstrom geleitet werden kann. Die Spule 300, das Joch 305 sowie der Steckanschluss 310 sind in einem unteren Gehäuseelement 315 eingefasst, auf welches ein oberes Gehäuseelement 320 bei einer Herstellung der Magnetvorrichtung 110 aufgesetzt wird, um ein Gesamtgehäuse für die Magnetvorrichtung 110 zu bilden. Das obere Gehäuseelement 320 umfasst einen seitlichen Schutzbügel 325, der sich über den Steckanschluss 310 hinweg erstreckt und somit einen in der Fig. 3 nicht dargestellten der Stecker der Aktivierungsstromleitungen 210 einerseits abdeckt und andererseits fixiert.

Weiterhin weist die Magnetvorrichtung 110 ein Ankerelement 330 auf, welches die durch die Spule 300 beweglich gelagert oder lagerbar ist. Dabei weist das Ankerelement 330 mehrere Teilelemente auf, beispielsweise einen metallischen, magnetischen und/oder magnetisierbaren Kern 335, welcher aufgrund einer Magnetkraft bei einem Stromfluss eines Aktivierungsstroms durch die Spule 300 in eine Zugrichtung 340 in die Spule hinein gezogen wird. Der Kern 335 ist dabei fest mit einem weiteren Teilelement, hier einem Stößel 345 verbunden, welches beispielsweise aus einem anderen Material als der Kern 335 (günstigerweise einem Material mit einer geringen Dichte) besteht oder ein solches Material enthält. Auf diese Weise kann nun in gewichtsmäßig sehr leichtes Ankerelement 330 bereitgestellt werden, welches bei einem Durchfluss eines Aktivierungsstroms durch die Spule 300 in Zugrichtung 340 in die Spule 300 hinein bewegt wird.

An einem Durchbruch 350 des unteren Gehäuseelements 315 ist das Ankerelement 330 in einer Gleitbuchse 355 gelagert, um ein leichtes und störungsfreies Gleiten des Ankerelements 330 durch die Spule 300 sicherzustellen. Um nun eine eindeutige und reproduzierbare Position des Ankerelements 330 bei einer Aktivierung der Magnetvorrichtung 110 durch ein Einleiten des Aktivierungsstroms durch die Spule 300 sicherzustellen, weist nun der Kern 332 einen Abschnitt 360 mit einer konischen Form auf, in dem sich der Kern 335 in Richtung der Gleitbuchse 355 hin verjüngt. Ferner weist die Magnetvorrichtung 110 einen Endanschlag 365 auf, der ebenfalls eine konische Form aufweist, die der Form des Abschnitts 360 entspricht. Hierdurch lässt sich eine sehr große Abstützfläche beim Aufsetzen des Abschnitts 360 auf den Endanschlag 365 Realisierung, sodass eine sichere und präzise Positionierung des Ankerelements 330 bei einer Aktivierung der Magnetvorrichtung 110 erreicht werden kann.

Um nun das Ankerelement 330 nach einer Aktivierung der Magnetvorrichtung 110 wieder in die in Fig. 3 dargestellte Ausgangsstellung zu bringen, ist sie nun eine Feder 370 vorgesehen, welche vorliegend als Kegel- oder Ringfeder ausgebildet ist. Die Feder 370 ist zwischen das Joch 305 und einen Vorsprung 375 des Stößels 345 verbaut, sodass sie in einem Bewegen des Ankerelements 330 in die Zugrichtung 340 gespannt wird. Durch das Vorsehen der Feder 370 kann somit auf ein Rückstellen der Magnetvorrichtung 110 mittels eines Aktivierungsstroms durch die Spule 300 mit umgekehrten Vorzeichen (bezogen auf den Stromfluss zur Bewegung des Ankerelements 330 in die Zugrichtung 340) verzichtet werden, sodass ein starkes Aufheizen der Magnetvorrichtung 110 im Betrieb reduziert oder sogar verhindert werden kann.

Um eine möglichst große Lebensdauer der Magnetvorrichtung 110 sicherzustellen, können Schläge einer Bewegung des Ankerelements 330 in die Zugrichtung 340, insbesondere beim Aufsetzen des Vorsprungs 370 auf dem Joch 305 dadurch gemildert werden, dass ein Dämpfungselement 380 vorgesehen ist, welches am Vorsprung 375 befestigt und zwischen dem Vorsprung 375 und dem Joch 305 angeordnet ist. Um ein hartes Aufsetzen bei einem Rückstellen der Magnetvorrichtung 110 am oberen Gehäuseelement 320 zu verhindern, kann ferner ein Dämpfungsglied 385 vorgesehen sein, welches auf einer der Feder 370 gegenüberliegenden Seite des Vorsprungs 375 angeordnet und befestigt ist. Das Dämpfungselement 380 und/oder das Dämpfungsglied 385 können beispielsweise aus einem reversibel verformbaren Silikonmaterial oder Schaummaterial hergestellt sein. Dabei können das Dämpfungselement 380 und das Dämpfungsglied 385 günstigerweise so ausgestaltet sein, dass beispielsweise ein Innendurchmesser des Dämpfungselements 380 einem Außendurchmesser des Dämpfungsglieds 385 entspricht. Auf diese Weise kann bei der Herstellung des Dämpfungsglieds 385 ein Stanzrest der Herstellung des Dämpfungselements 380 weiter verwendet werden, wodurch sich Materialkosten einsparen lassen. Alternativ kann natürlich auch beispielsweise ein Innendurchmesser des Dämpfungsgliedes 385 einem Außendurchmesser des Dämpfungselementes 380 entsprechend.

Damit eine Position der Magnetvorrichtung 110 einfacher und zuverlässig festgestellt werden kann, umfasst die Magnetvorrichtung weiterhin einen Permanentmagneten 390 aufweisen, der in eine entsprechende Ausnehmung des oberen Gehäuseelements 320 eingebettet ist. Dieser Permanentmagnet 390 ist mit in der Fig. 3 nicht dargestellten Flussleitelementen mit einem Reed-Kontakt 395 verbunden, der in eine seitliche Ausnehmung des oberen Gehäuseelements 320 eingeschoben ist, und der, wie nachfolgend noch näher beschrieben wird, durch die beiden Signalleitungen 220 aus Fig. 2 kontaktierbar oder kontaktiert ist.

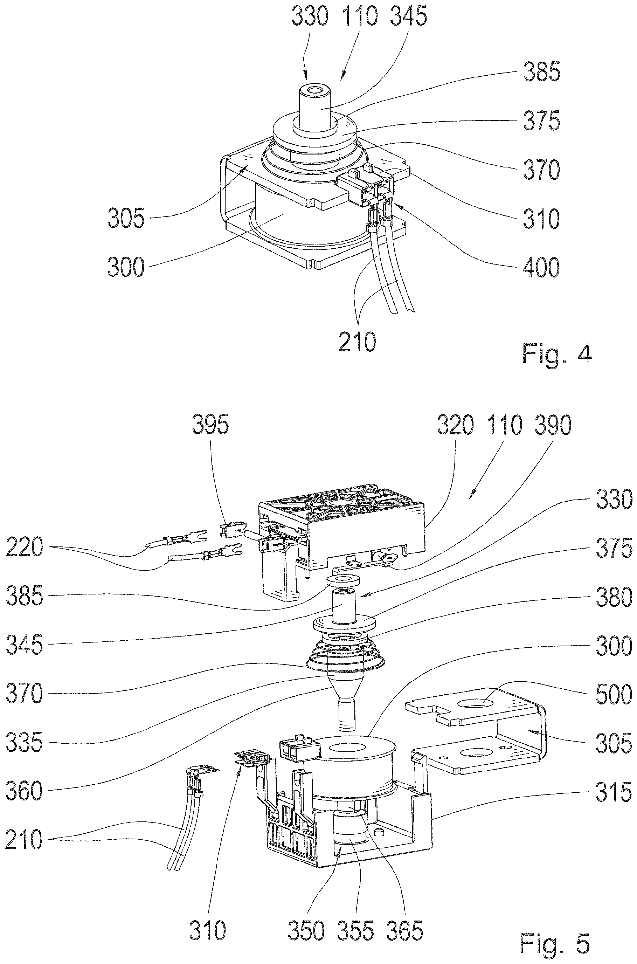

Fig. 4 zeigt eine perspektivische Ansicht von mehreren Komponenten der Magnetvorrichtung 110 gemäß einem Ausführungsbeispiel der vorliegenden Erfindung. Hierbei wird ersichtlich, dass die Feder 370 als Kegel- oder Ringfeder ausgestaltet ist, welche einen gleichmäßigen Druck auf den Vorsprung 375 des Stößels 345 ausübt. Weiterhin ist das Dämpfungsglied 385 erkennbar, welches auf der in Fig. 4 sichtbaren Oberseite des Vorsprungs 375 angeordnet ist. Ebenfalls erkennbar ist das Joch 305 sowie die von dem Joch 305 umfasste Spule 300 sowie der Steckanschluss 310, an welchem nun Steckkontakte 400 sowie daran befestigte Aktivierungsstromleitungen 210 dargestellt sind. Durch die Anordnung der Feder 370 lässt sich nun eine sehr kompakte Bauform der Spule 300 mit dem darin beweglich gelagerten Ankerelement 330 herstellen, da nun im Inneren der Spule, das heißt im Bewegungsbereich des Ankerelements 330, eine Öffnung mit einem geringeren Innendurchmesser und hierdurch weniger Material für die Ausbildung der Spule 300 erforderlich ist. Dies ist insbesondere bei hohen Rohstoffpreisen wie aktuell für Kupfer sehr kostensenkend.

Fig. 5 zeigt ein Ausführungsbeispiel der Magnetvorrichtung 110 in einer Explosionsdarstellung. Gut erkennbar ist hierbei der Aufbau der Magnetvorrichtung 110 mit der Spule 300 mit dem darübergesetzten Joch 305, welches ein Loch 500 zur Freigabe des Inneren der Spule 300 aufweist. Weiterhin ist gut erkennbar der sich verjüngende Abschnitt 360 des Kerns 335 des Ankerelements 330, die Feder 370, das Dämpfungselement 380, der Stößel 345 (der den stromlosen Zustand der Spule aus der Magnetvorrichtung 110 herausragt und eine Fixierung der Magnetvorrichtung 110 bzw. des an der Magnetvorrichtung 110 fixierten Getriebeschalthebels 120 in einer vorbestimmten Position an einer in der Fig. 5 nicht dargestellten Bewegungsschiene 140 ermöglicht), das Dämpfungsglied 385, der Permanentmagneten 390 sowie der Reed-Kontakt 395.

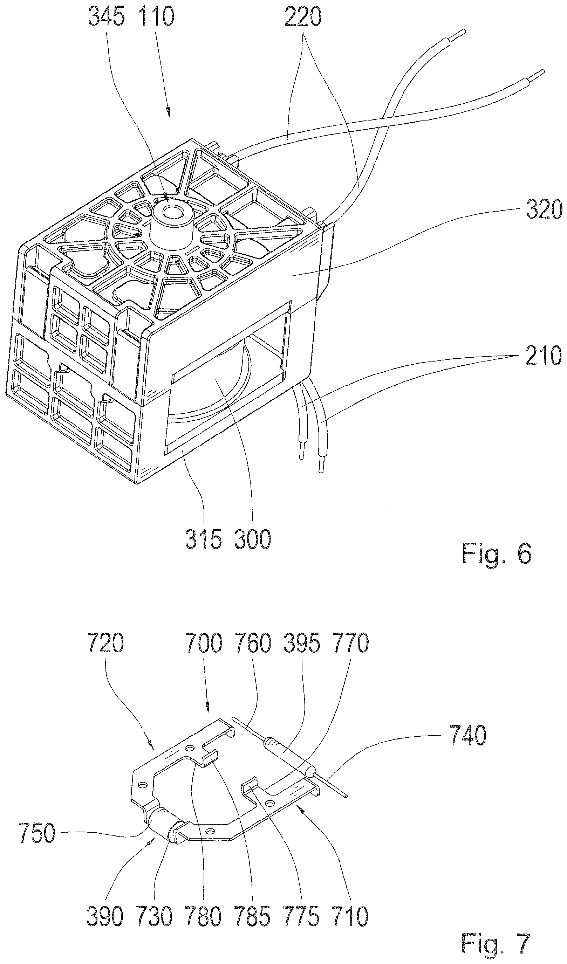

Fig. 6 zeigt ein Ausführungsbeispiel der vorliegenden Erfindung als Magnetvorrichtung 110 in einer perspektivischen Ansicht. Hierbei ist der Stößel 345 in einem ausgefahrenen Zustand erkennbar, das heißt in einem Zustand, in dem die Spule 300 nicht mit einem Aktivierungsstrom durch die Aktivierungsleitungen 210 beaufschlagt wird. Wie aus der Fig. 6 wiedergegebenen Darstellung sichtbar ist, ragt der Stößel 345 über das obere Gehäuseelement 320 heraus und kann somit Eingriff in einer in Fig. 6 nicht dargestellten Ausnehmung einer Bewegungsschiene 140 eingreifen und die Magnetvorrichtung 110 in einer bestimmten Position fixieren.

Fig. 7 zeigt eine perspektivische Darstellung eines Schaltelements 700, wie es beispielsweise in einem oberen Gehäuseelement 320 gemäß Fig. 3 verbaut werden kann. Das Schaltelement 700 umfasst dabei den Permanentmagneten 390 sowie den Reed-Kontakt 395 sowie ein erstes Flussleitelement 710 und ein zweites Flussleitelement 720. Das erste Flussleitelement 710 ist zwischen einem ersten Pol 730 des Permanentmagneten 390 und einen ersten Anschluss 740 des Reed-Kontakts 395 angeordnet. Das zweite Flussleitelement 720, welches ebenso wie das erste Flussleitelement 710 als Flussleitblech ausgebildet ist, ist zwischen einem zweiten Pol 750 des Permanentmagneten 390 und einen zweiten Anschluss 760 des Reed-Kontakts 395 angeordnet. Auf diese Weise wird durch den Permanentmagneten 390 ein magnetischer Fluss durch das erste Flussleitelement 710 über den Reed-Kontrakt 395 und das zweite Flussleitelement 720 zurück zum Permanentmagneten 390 geführt.

Weiterhin weist das erste Flussleitelement 710 eine erste Flussleitnase 770 auf, welche sich vom ersten Flussleitelement 710 in Richtung des zweiten Flussleitelements 720 hin erstreckt und einen abgeknickten Abschnitt 775 aufweist, der (in der Fig. 7 nach oben) aus einer Haupterstreckungsebene des ersten Flussleitelements 710 herausgebogen ist. Auch weist das zweite Flussleitelement 720 eine zweite Flussleitnase 780 auf, die sich vom zweiten Flussleitelement 720 in Richtung des ersten Flussleitelements 710 hin erstreckt und einen abgeknickten Abschnitt 785 aufweist, der (in der Fig. 7 nach oben) aus einer Haupterstreckungsebene des zweiten Flussleitelements 720 herausgebogen ist.

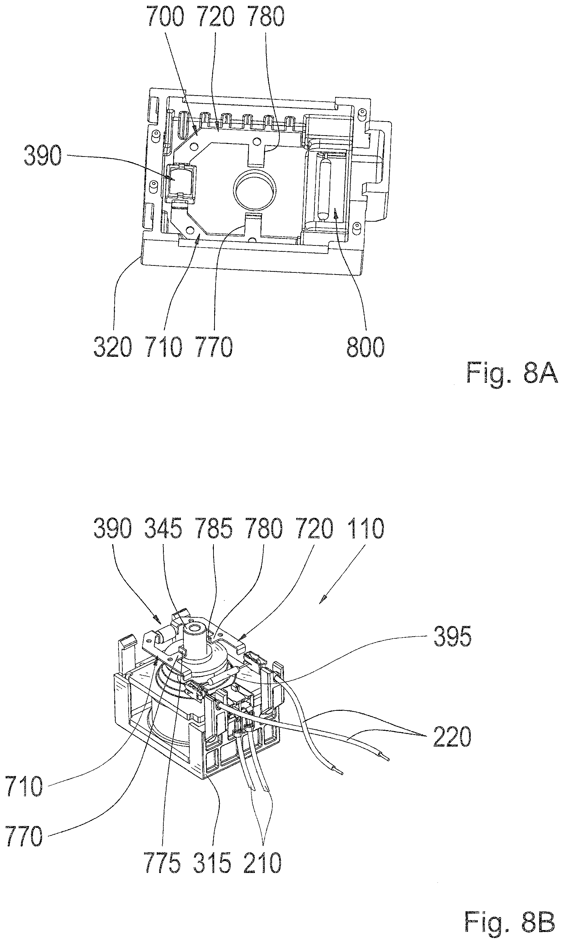

Fig. 8A zeigt eine Darstellung eines oberen Gehäuseelements 320 mit einem darin angeordneten Schaltelement 700, wie es mit Bezug zur Fig. 7 näher erläutert wurde. Der Reed-Kontakt 395, der in der Fig. 7 dargestellt ist, ist in der Fig. 8 durch einen Vorsprung 800 des oberen Gehäuseelements 320 verdeckt.

Fig. 8B zeigt eine perspektivische Darstellung einer Magnetvorrichtung 110 mit einem entfernten oberen Gehäuseelement 320, jedoch mit dem in diesem Gehäuseelement 320 vorgesehenen Schaltelement 700. Hierbei ist ersichtlich, dass der Stößel 345 in einem Zustand, in dem er aus dem Gehäuse der Magnetvorrichtung 110 herausragt, zwischen den beiden umgeknickten Abschnitten 775 und 785 der ersten Flussleitnase 770 bzw. der zweiten Flussleitnase 780 angeordnet ist. Insbesondere dann, wenn entweder der Stößel 345 selbst ein metallisches, magnetisches und/oder magnetisierbares Material umfasst bzw. von einer Hülle aus einem solchen Material umgeben ist, kann nun der durch den Permanentmagneten 390 verursachte magnetische Fluss in einem magnetischen Kurzschluss zwischen der ersten Flussleitnase 770 und der zweiten Flussleitnase 780 fließen, wodurch der bei Reed-Kontakt 395 nicht mehr im magnetischen (Haupt-) Fluss liegt und somit öffnet. Auf diese Weise lässt sich sehr einfach berührungsfrei ermitteln, ob der Stößel 345 und ein metallisches, magnetisches und/oder magnetisierbares Element zwischen der ersten Flussleitnase 770 und der zweiten Flussleitnase 780 angeordnet ist oder in diesen Bereich eingeführt wird.

Alternativ kann auch der (nicht metallische, magnetische bzw. magnetisierbare) Stößel 345 ein metallisches, magnetisches oder magnetisierbares Element wie beispielsweise den Ringeinleger 230 entsprechend der Darstellung aus Fig. 2) aus einem Bereich zwischen der ersten Flussleitnase 770 unter der zweiten Flussleitnase 780 verdrängen. In diesem Fall würde somit in einem Zustand, in dem der Stößel 345 aus einem Gehäuse der Magnetvorrichtung 110 herausragt einen magnetischen Fluss über den Reed-Kontakt 395 bewirken, wogegen in einem Zustand, in dem der Stößel 345 nicht aus einem Gehäuse der Magnetvorrichtung 110 herausragt, ein magnetischer Fluss über das zwischen der ersten Flussleitnase 770 und der zweiten Flussleitnase 780 eingebrachte metallische, magnetische bzw. magnetisierbare Element fließen und der Reed-Kontakt 395 öffnen. Die Auswertung des Schaltzustands des Reed-Kontakts 395 mittels der Signalleitungen 220 kann somit unter Kenntnis der Anordnung von metallischen, magnetischen bzw. magnetisierbaren Komponenten im Bereich zwischen der ersten Flussleitnase 770 und der zweiten Flussleitnase 780 einen Hinweis auf ein Herausragen oder Nicht- Herausragen des Stößels 345 aus einem Gehäuse der Magnetvorrichtung 110 liefern.

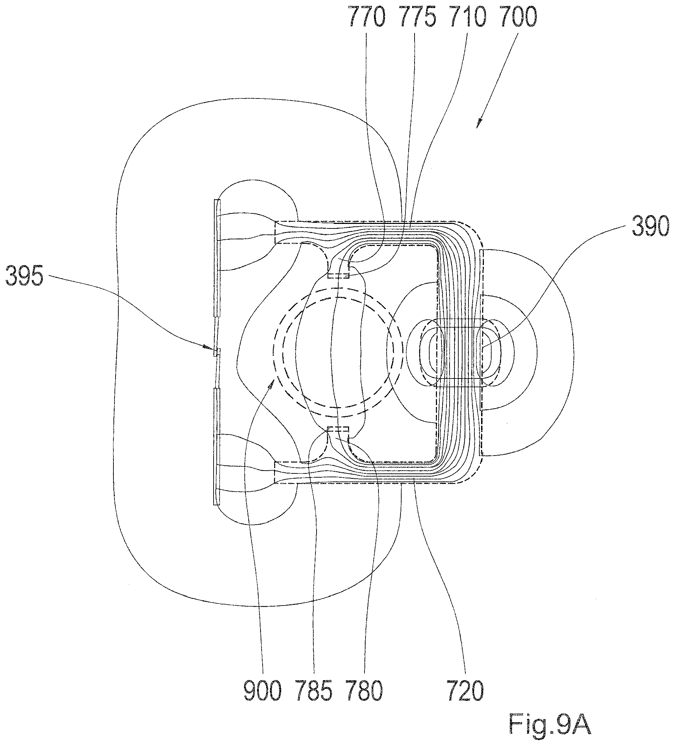

Fig. 9A zeigt eine Aufsichtdarstellung des Schaltelements 700, wobei nun magnetische Flusslinien durch die entsprechenden Komponenten des Schaltelements 700 dargestellt sind. Hierbei ist kein Element wie beispielsweise der Ringeinleger 230, der Stößel 345 oder eine entsprechende metallische Hülle um den Stößel 345 an der gestrichelt dargestellten Position 900 zwischen der ersten Flussleitnase 770 und der zweiten Flussleitnase 780 angeordnet. Aus der Fig. 9A ist dabei ersichtlich, dass der von dem Permanentmagneten 390 generiert magnetische Fluss fast vollständig über den Reed-Kontakt 395 fließt, wodurch der Reed-Kontakt 395 geschlossen ist.

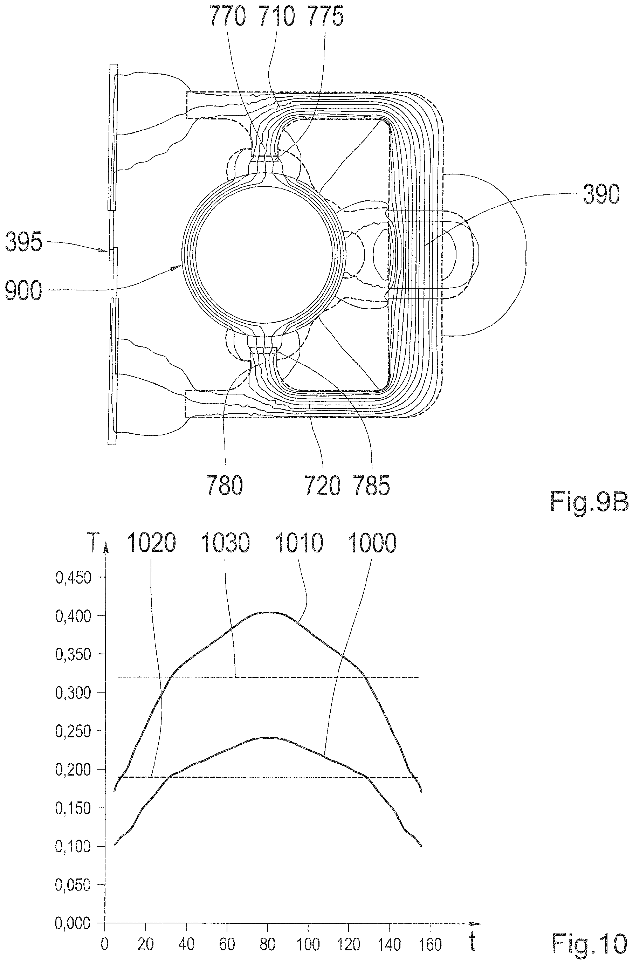

Fig. 9B zeigt eine Aufsichtdarstellung des Schaltelements 700, wobei nun in der Position 900 zwischen der ersten Flussleitnase 770 und der zweiten Flussleitnase 780 ein entsprechendes metallisches, magnetisches und/oder magnetisierbares Element wie beispielsweise der Ringeinleger 230, der Stößel 345 oder eine entsprechende metallische Hülle um den Stößel 345 angeordnet ist. Wie aus der Fig. 9B zu erkennen ist, wird durch das Element an der Position 900 ein magnetische Kurzschluss zwischen der ersten Flussleitnase 770 und der zweiten Flussleitnase 780 induziert, sodass nun der Hauptanteil des durch den Permanentmagneten 390 generierten magnetischen Flusses über das Element an der Position 900 fließt. Folglich fließt ein sehr geringer Anteil des magnetischen Flusses über den Reed-Kontakt 395, wodurch dieser öffnet. Die Öffnung bzw. das Schließen des Reed-Kontakt 394 kann durch Anschlüsse der Signalleitungen 220 erfasst werden an und ich hierdurch (beispielsweise berührungslos) die Positionierung des (metallischen, magnetischen und/oder magnetisierbaren) Elements in der Position 900 erkannt werden.

Fig. 10 zeigt ein Diagramm, in dem ein magnetischer Fluss in Tesla T zwischen den Anschlüssen des Reed-Kontakts 395 über einen Zeitverlauf t (dargestellt in unterschiedlichen Messpunkten) wiedergegeben ist. Dabei wird ein entsprechendes Element an der Position 900 zwischen die erste Flussleitnase 770 und die zweite Flussleitnase 780 herausgezogen und wieder eingeschoben. Ist nun dieses Element ein metallisches, magnetisches und/oder magnetisierbares Element, wie beispielsweise ein Ringeinleger 230 entsprechend der Darstellung aus Fig. 2 in einer Schaltstellung des Getriebeschalthebels 120 in der Schaltposition für Parken P, wird am Reed-Kontakt 395 durch den zwischen der ersten Flussleitnase 770 und der zweiten Flussleitnase 780 bewirkten magnetischen Kurzschluss der magnetische Fluss entsprechende Kennlinie 1000 wesentlich geringer ansteigen, als dies für andere Fälle gilt, bei denen kein metallisches, magnetisches und/oder magnetisierbares Element an der Position 900 eingebracht ist, sodass in diesen Fällen dann über den Reed-Kontakt 995 ein magnetische Fluss entsprechend der Kennlinie 1010 vorliegt. Somit kann festgestellt werden, dass ein metallisches, magnetisches und/oder magnetisierbares Element an der Position 900 dann eingefügt wird, wenn am Reed-Kontakt 395 ein magnetische Fluss T erfasst ist, der einen ersten Schwellwert 1020 überschreitet, nicht jedoch einen zweiten Schwellwert 1030, der größer als der erste Schwellwert 1020 ist. Wird nun erkannt, dass an der Position 900 ein metallisches, magnetisches und/oder magnetisierbares Element vorliegt, kann diese Information als ein Einrasten des Getriebeschalthebels 120 interpretiert werden, und beispielsweise eine Zündschlüsselfreigabe zum Abziehen des Zündschlüssels aus einem Zündschloss erfolgen.

Zusammenfassend kann somit angemerkt werden, dass der hier beschriebene Ansatz die oben beschriebenen Probleme zumindest teilweise durch eine grundsätzliche Neukonstruktion löst, bei der die Einzelfunktionen des Magneten bzw. der Magnetvorrichtung aufgelöst und in einer neuen Anordnung dargestellt werden. So wird die Teilfunktion "Längsaktuator" durch einen E-Magneten abgebildet, der ausschließlich als Magnet arbeitet und somit sauber abgestimmt werden kann. Durch diese Maßnahme kann der Kupferanteil der Spule 300 des Magneten 110 deutlich reduziert werden. Die nun mögliche Gestaltung des Endanschlages 365 ermöglicht eine "Peek and Hold"-Steuerung, was den Stromverbrauch reduziert. Diese kompakte Anordnung erlaubt den Einsatz eines einfachen U-Joches 305, was ebenfalls die Systemkosten reduziert. Der Anker 335 (bzw. Kern) kann kleiner ausgeführt werden, was die bewegte Masse und somit die kinetische Energie des aktuierten Ankers 335 reduziert. Die Einführung des Stößels 345 als Verlängerung des Ankers 335 aus Kunststoff reduziert ebenfalls die Ankermasse gegenüber einem aus einem Stück gefertigten Anker 335. Über die Geometrie des Stößels 345 kann die Endlagendämpfung mit den Silikonschaumscheiben 380 bzw. 385 abgestimmt werden. Die Teilfunktion Endlagendämpfung ist in Aktuierungsachse hinter dem Magneten 300 bzw. 335 angeordnet und wird durch Silikonschaumscheiben 380 bzw. 385 dargestellt. Wobei hier der Stanzabfall der größeren Scheibe 380 das Basismaterial für die kleinere Scheibe 385 darstellt. Die Rückstellung des Ankers 335 erfolgt mit der Kegelfeder 370. Die Gehäusehälften 315 und 320 stützen die über den Anker 335 und Stößel 345 eingeleitete Kraft in das umgebende Gehäuse des Wählhebels 120 ab. Die Verwendung eines Kunststoffteils als unteres Gehäuseelement 315 bzw. oberes Gehäuseelement 320 bietet eine hohe Gestaltungsfreiheit und ermöglich die Integration der Schaltfunktion in der Position "P". Die Schaltfunktion wird über einen Reedschalter 395 dargestellt, der über einen Dauermagneten 390 und Flussleitbleche 710 bzw. 720 dauerhaft angezogen wird. Wenn der Ringeinleger 230 des Längsschiebers 240 vor dem Magneten 110 steht, wird das Feld über die abgewinkelten Abschnitte 775 bzw. 785 und den Einleger an der Position 900 geleitet und der Reed-Kontakt 395 öffnet.

Alternativ zum Reedschalter 395 könnte auch ein in den Figuren nicht dargestellter Mikroschalter oder Halte-Element eingesetzt werden, der eine Schaltnocke am Längsschieber 240 detektiert. Alternativ zu den Kabeln 210 und/oder 220 könnte ein Stanzgitter zur internen Verkabelung im Wählhebel 120 verwendet werden. Anstatt der verwendeten Kontakte zur Kontaktierung der Spule 300 und des Reeds 395 könnte auch eine widerstandsgeschweißte Verbindung (oder Lötverbindung) realisiert werden.

Durch den hier vorgestellten Ansatz kann vermieden werden, dass ein hoher Stromverbrauch und damit hohe Erwärmung im Wählhebel verursacht wird. Hierdurch kann eine hohe Temperatur-Bauteilspezifikation vermieden werden. Auch können hohe Positionstoleranzen verhindert werden, wodurch eine Magnetvorrichtung schwer abstimmbar wird. Auch kann ein separat verbauter Schalter zur Detektion für die Position "P" vermieden werden. Ferner ist auch ein hoher Applikationsaufwand bei Neuprojekten zur Entwicklung einer Magnetvorrichtung 110 zu vermeiden. Auch kann eine komplexe Verkabelungsarchitektur im Wählhebel 120 vermieden werden und es braucht keine große/teure Spule mit hohem Kupferanteil verwendet werden. Zusätzlich lässt sich ein aufwendiges und teures Magnetjoch vermeiden und eine "Peek and Hold"-Steuerung kann mit dem hier vorgeschlagenen Ansatz ermöglicht werden.

Vielmehr werden durch den hier vorgestellten Ansatz verschiedene der oben beschriebenen Probleme gelöst. Zum einen kann eine Endlagendämpfung aus dem Magneten herausgelöst und in der Verlängerung der Ankerachse angeordnet werden. Dies bringt mehrere Vorteile. Beispielsweise kann der Ankerdurchmesser im Durchmesser reduziert werden. Ferner kann auch eine Reduzierung der Ankermasse und für eine Bewegung des Ankers erforderliche kinetische Energie ermöglicht werden. Der Magnetkreis kann hinsichtlich des Hubverhaltens feinfühlig abgestimmt werden und die Endlagentoleranzen reduzieren sich. Es kann eine erhöhte Haltkraft angestrebt werden, was eine "Peak and Hold"-Ansteuerung ermöglicht. Die Leistungsaufnahme und Erwärmung sinkt außerdem. Die Spule kann in ihren Abmessungen verkleinert werden, der Kupferanteil wird reduziert, was eine deutliche Kostenreduktion zur Folge hat. Ferner kann auch die Endlagendämpfung sehr gut abgestimmt werden und es kann ein dünneres und günstigeres Material eingesetzt werden. Durch die Verwendung eines zweiteiligen Ankers mit einem Kunststoffteil wird die Ankermasse ebenfalls reduziert. Die Verwendung eines Kunststoff-Rahmens für die Halterung des Schaltelementes (beispielsweise im oberen Gehäuseelement 320 ermöglicht die Integration eines Reedschalters zur Detektion der Schaltstellung des Getriebeschalthebels 120 in der Position "P". Mit dem in dem Rahmen 320 integrierten Magneten 390 kann der bereits vorhandene Einleger 230 im Längsschieber detektiert werden. Die in den Kunststoffrahmen 320 integrierten Schnei-Klemm- Kontakte ermöglichen eine lötfreie Anbindung des Reed-Kontakts 395. Die Schnittstelle zum Wählhebel hat durch die Verwendung eines Kunststoffteils eine hohe Gestaltungsfreiheit und kann über Wechseleinsätze im Werkzeug einfach auf die jeweilige Applikation abgestimmt werden. Wird der Magnet 110 zusätzlich als Tilger zur Bedämpfung von Körperschallschwingungen im Wählhebel 120 verwendet, kann über den Kunststoffrahmen die Abstützung im Gehäuse des Wählhebels 120 feinfühlig abgestimmt werden. Durch die Integration der Schaltfunktion in den Magneten 110 wird die interne Verkabelung zwischen der Leiterplatte und der Funktionalität "Magnet und Schalter" an einem Ort zusammengeführt, was den Verkabelungsaufwand reduziert. Gegebenenfalls kann die interne Verkabelung (beispielsweise der Leitungen 210 und 220) durch ein Stanzgitter abgelöst werden. Dies würde insbesondere dadurch ermöglicht, dass die Kontaktierrichtung für beide Funktionalitäten in eine Richtung zeigt.

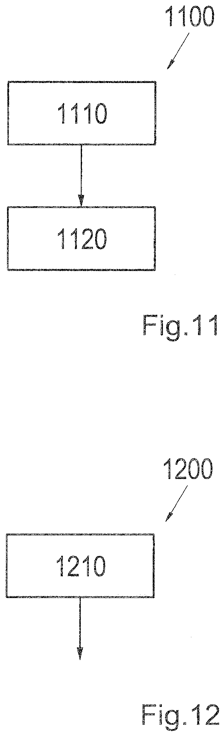

Fig. 11 zeigt ein Ablaufdiagramm eines Ausführungsbeispiels der vorliegenden Erfindung als Verfahren 1100 zur Herstellung einer Magnetvorrichtung. Das Verfahren 1100 umfasst einen Schritt 1110 des Bereitstellens einer Spule, eines Ankerelements und einer Feder und einen Schritt 1120 des Anordnens des Ankerelementes in der Spule, wobei das Ankerelement beweglich in der Spule gelagert wird und wobei die Feder außerhalb der Spule angeordnet wird, wobei die derart angeordnet wird, um das Ankerelement aus der Spule herauszudrücken.

Fig. 12 zeigt ein Ablaufdiagramm eines Ausführungsbeispiels der vorliegenden Erfindung als Verfahren 1200 zum Betreiben einer Magnetvorrichtung mit einer Spule, einem Ankerelement, das in der Spule beweglich gelagert oder lagerbar ist und einer Feder, die außerhalb der Spule angeordnet ist, wobei die Feder ausgebildet ist, um das Ankerelement aus der Spule herauszudrücken. Das Verfahren 1200 umfasst den Schritt 1210 des Beaufschlagens der Spule mit einem Spulenstrom, um das Ankerelement in die Spule zu ziehen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 110: Magnetvorrichtung
- 120: Getriebewahlhebel, Getriebeschalthebel
- 130: Automatikgetriebe
- 140: Bewegungsschiene

- 200: (Innen-) Teil des Getriebeschalthebels
- 210: Aktivierungsstromleitungen
- 220: Signalleitungen
- 230: Ringeinleger
- 240: Längsschieber

- 300: Spule
- 305: Joch
- 310: Steckanschluss
- 315: unteres Gehäuseelement
- 320: oberes Gehäuseelement
- 325: Schutzbügel
- 330: Ankerelement
- 335: metallischer Kern
- 340: Zugrichtung
- 345: Stößel
- 350: Durchbruch
- 355: Gleitbuchse
- 360: Abschnitt mit einer konischen Form
- 365: Endanschlag
- 370: Feder
- 375: Vorsprung
- 380: Dämpfungselement
- 385: Dämpfungsglied
- 390: Permanentmagneten

- 395: Reed-Kontakt

- 400: Steckkontakte

- 500: Loch

- 700: Schaltelement
- 710: erstes Flussleitelement
- 720: zweites Flussleitelement
- 730: erster Pol
- 740: erster Anschluss
- 750: zweiter Pol
- 760: zweiter Anschluss
- 770: erste Flussleitnase
- 775: abgeknickten Abschnitt der ersten Flussleitnase
- 780: zweite Flussleitnase
- 785: abgeknickten Abschnitt der zweiten Flussleitnase

- 800: Vorsprung des oberen Gehäuseelements 320

- 900: Position zwischen der ersten und zweiten Flussleitnase

- 1000: Kennlinie
- 1010: Kennlinie
- 1020: erster Schwellwert
- 1030: zweiter Schwellwert

- 1100: Verfahren zur Herstellung einer Magnetvorrichtung
- 1110: Schritt des Bereitstellens.
- 1120: Schritt des Anordnens

- 1200: Verfahren zum Betreiben einer Magnetvorrichtung
- 1210: Schritt des Beaufschlagens

## Patentansprüche

1. Magnetvorrichtung (110) zur Arretierung eines Gangwahlhebels (120) eines Fahrzeugs (100) in einer vorbestimmten Position, wobei die Magnetvorrichtung (110) folgende Merkmale aufweist:
eine Spule (300);
ein Ankerelement (330, 335, 345), das in der Spule (300) beweglich gelagert oder lagerbar ist; und
eine Feder (370), die außerhalb der Spule (300) angeordnet ist, wobei die Feder (370) ausgebildet ist, um zumindest einen Teil des Ankerelements (330) aus der Spule (300) herauszudrücken,
**dadurch gekennzeichnet, dass** eine Bewegungsschiene vorgesehen ist, die zur Führung einer Bewegung der Magnetvorrichtung dient,
und dass ein Schaltelement (700) an der Magnetvorrichtung vorgesehen ist, das ausgebildet ist, um mit einem an der Bewegungsschiene (140) angeordneten Positionselement (230) und dem Ankerelement (330) zusammenzuwirken, um eine Position der Magnetvorrichtung (110) in der Bewegungsschiene (140) zu erfassen.

2. Magnetvorrichtung (110) gemäß Anspruch 1, **dadurch gekennzeichnet, dass** die Feder (370) eine Kegel- oder Ringfeder ist, wobei die Feder (370) das Ankerelement (330) zumindest teilweise umfasst.

3. Magnetvorrichtung (110) gemäß einem der vorangegangenen Ansprüche, **dadurch gekennzeichnet, dass** das Ankerelement (330) einen zumindest teilweise in der Spule (300) beweglichen Kern (335) und einen an dem Kern (335) befestigten Stößel (345) aufweist, der ein anderes Material als der Kern (335), insbesondere der ein Kunststoffmaterial aufweist.

4. Magnetvorrichtung (110) gemäß einem der vorangegangenen Ansprüche, **dadurch gekennzeichnet, dass** ein der Spule (300) abgewandtes Ende der Feder (370) an einem Vorsprung (375) des Ankerelementes (330) abgestützt ist, wobei ein Dämpfungselement (380) zwischen dem Vorsprung (375) und der Spule (300) angeordnet ist.

5. Magnetvorrichtung (110) gemäß einem der vorangegangenen Ansprüche, **gekennzeichnet durch** ein Dämpfungsglied (385), wobei das Dämpfungsglied (385) auf einer der Spule (300) gegenüberliegenden Seite der Feder (370) angeordnet ist.

6. Magnetvorrichtung (110) gemäß Anspruch 4 und 5, **dadurch gekennzeichnet, dass** das Dämpfungselement (380) eine Öffnung mit einem Innendurchmesser aufweist, die einem Außendurchmesser des Dämpfungsgliedes (385) entspricht, oder wobei das Dämpfungsglied (385) eine Öffnung mit einem Innendurchmesser aufweist, die einem Außendurchmesser des Dämpfungselementes (380) entspricht.

7. Magnetvorrichtung (110) gemäß einem der vorangegangenen Ansprüche, **gekennzeichnet durch** ein Anschlagelement (365), welches an einer der Feder (370) gegenüberliegenden Seite der Spule (300) angeordnet ist, wobei das Anschlagelement (365) ausgebildet ist, um einen Bewegungsweg des Ankerelementes (330) durch die Spule (300) zu begrenzen.

8. Magnetvorrichtung (110) gemäß Anspruch 7, **dadurch gekennzeichnet, dass** das Ankerelement (330) eine konische Form aufweist und das Anschlagelement (365) eine der konischen Form des Ankerelementes (330) entsprechende konische Form aufweist.

9. Magnetvorrichtung (110) gemäß einem der vorangegangenen Ansprüche, **dadurch gekennzeichnet, dass** die Spule (300) zumindest teilweise von einem U-förmigen Joch (305) umgeben ist, insbesondere wobei das Joch (305) zumindest teilweise aus einem Metallblech gefertigt ist.

10. Magnetvorrichtung (110) gemäß Anspruch 1, **dadurch gekennzeichnet, dass** das Schaltelement (700) einen Reed-Kontakt (395) und zumindest einen Permanentmagneten (390) aufweist.

11. Magnetvorrichtung (110) gemäß Anspruch 10, **dadurch gekennzeichnet, dass** zwischen je einem Ende des Reed-Kontaktes (395) und dem Permanentmagneten (390) ein Flussleitungselement (710, 720) angeordnet ist, insbesondere wobei zumindest ein Flussleitungselement (710) eine dem anderen Flussleitungselement (720) zugewandte Flussleitungsnase (770) aufweist.

12. Getriebeschalthebel (120) mit einer Magnetvorrichtung (110) gemäß einem der vorangegangenen Ansprüche.

13. Verfahren (1100) zur Herstellung der Magnetvorrichtung (110) gemäß Anspruch 1 wobei das Verfahren die folgenden Schritte aufweist:
Bereitstellen (1110) der Spule (300), des Ankerelements (330) und der Feder (370); und
Anordnen (1120) des Ankerelementes (330) in der Spule (300), wobei das Ankerelement (330) in der Spule (300) beweglich gelagert wird und wobei die Feder (370) außerhalb der Spule (300) angeordnet wird, wobei die Feder (370) derart angeordnet wird, um das Ankerelement (330) aus der Spule (300) herauszudrücken.

14. Verfahren (1200) zum Betreiben der Magnetvorrichtung (110) gemäß Anspruch 1, wobei das Verfahren den folgenden Schritt aufweist:
Beaufschlagen (1210) der Spule (300) mit einem Aktivierungsstrom, um das Ankerelement (330) in die Spule (300) zu ziehen.

## Claims

1. Magnet device (110) for locking a gear selector lever (120) of a vehicle (100) in a predetermined position, wherein the magnet device (110) has the following features:
a coil (300);
an armature element (330, 335, 345) which is or can be movably mounted in the coil (300); and
a spring (370) which is arranged outside the coil (300), wherein the spring (370) is designed to press at least part of the armature element (330) out of the coil (300),
**characterized in that** a movement rail is provided which serves to guide a movement of the magnet device,
and **in that** a switching element (700) is provided on the magnet device, which switching element (700) is designed to interact with a position element (230) arranged on the movement rail (140) and with the armature element (330), in order to sense a position of the magnet device (110) in the movement rail (140).

2. Magnet device (110) according to Claim 1, **characterized in that** the spring (370) is a conical spring or annular spring, wherein the spring (370) at least partially surrounds the armature element (330).

3. Magnet device (110) according to one of the preceding claims, **characterized in that** the armature element (330) has a core (335) which can move at least partially in the coil (300), and a plunger (345) which is attached to the core (335) and has a different material from the core (335), in particular has a plastic material.

4. Magnet device (110) according to one of the preceding claims, **characterized in that** one end of the spring (370) which faces away from the coil (300) is supported on a projection (375) of the armature element (330), wherein a damping element (380) is arranged between the projection (375) and the coil (300).

5. Magnet device (110) according to one of the preceding claims, **characterized by** a damping element (385), wherein the damping element (385) is arranged on a side of the spring (370) lying opposite the coil (300).

6. Magnet device (110) according to Claims 4 and 5, **characterized in that** the damping element (380) has an opening with an internal diameter, which opening corresponds to an external diameter of the damping element (385), or wherein the damping element (385) has an opening with an internal diameter, which opening corresponds to an external diameter of the damping element (380).

7. Magnet device (110) according to one of the preceding claims, **characterized by** a stop element (365) which is arranged on a side of the coil (300) lying opposite the spring (370), wherein the stop element (365) is designed to limit a movement path of the armature element (330) through the coil (300).

8. Magnet device (110) according to Claim 7, **characterized in that** the armature element (330) has a conical shape, and the stop element (365) has a conical shape corresponding to the conical shape of the armature element (330).

9. Magnet device (110) according to one of the preceding claims, **characterized in that** the coil (300) is surrounded at least partially by a U-shaped yoke (305), in particular wherein the yoke (305) is fabricated at least partially from a piece of sheet metal.

10. Magnet device (110) according to Claim 1, **characterized in that** the switching element (700) has a reed contact (395) and at least one permanent magnet (390).

11. Magnet device (110) according to Claim 10, **characterized in that** a flux conducting element (710, 720) is arranged between in each case one end of the reed contact (395) and the permanent magnet (390), in particular wherein at least one flux conducting element (710) has a flux conducting projection (770) facing the other flux conducting element (720).

12. Selector lever (120) having a magnet device (110) according to one of the preceding claims.

13. Method (1100) for manufacturing the magnet device (110) according to Claim 1, the method having the following steps:
making available (1110) the coil (300) of the armature element (330) and the spring (370); and
arranging (1120) the armature element (330) in the coil (300), wherein the armature element (330) is movably mounted in the coil (300), and wherein the spring (370) is arranged outside the coil (300), wherein the spring (370) is arranged in such a way that it presses the armature element (330) out of the coil (300).

14. Method (1200) for operating the magnet device (110) according to Claim 1, the method comprising the following step:
applying (1210) an activation current to the coil (300), in order to draw the armature element (330) into the coil (300)

## Revendications

1. Dispositif magnétique (110) pour bloquer un levier de sélection de vitesse (120) d'un véhicule (100) dans une position prédéterminée, dans lequel le dispositif magnétique (110) présente les caractéristiques suivantes:
une bobine (300);
un élément d'induit (330, 335, 345), qui est ou peut être monté de façon mobile dans la bobine (300); et
un ressort (370), qui est disposé à l'extérieur de la bobine (300), dans lequel le ressort (370) est conçu pour repousser au moins une partie de l'élément d'induit (330) hors de la bobine (300),
**caractérisé en ce qu'**il est prévu un rail de déplacement, qui sert pour le guidage d'un déplacement du dispositif magnétique, et **en ce qu'**il est prévu sur le dispositif magnétique un élément de commutation (700), qui est conçu pour coopérer avec un élément de position (230) disposé sur le rail de déplacement (140) et avec l'élément d'induit (330), pour détecter une position du dispositif magnétique (110) dans le rail de déplacement (140).

2. Dispositif magnétique (110) selon la revendication 1, **caractérisé en ce que** le ressort (370) est un ressort conique ou annulaire, dans lequel le ressort (370) entoure au moins partiellement l'élément d'induit (330).

3. Dispositif magnétique (110) selon l'une quelconque des revendications précédentes, **caractérisé en ce que** l'élément d'induit (330) présente un noyau (335) au moins partiellement mobile dans la bobine (300) et un poussoir (345) fixé au noyau (335), qui présente un autre matériau que le noyau (335), en particulier qui présente une matière plastique.

4. Dispositif magnétique (110) selon l'une quelconque des revendications précédentes, **caractérisé en ce qu'**une extrémité du ressort (370) éloignée de la bobine (300) prend appui sur une saillie (375) de l'élément d'induit (330), dans lequel un élément d'amortissement (380) est disposé entre la saillie (375) et la bobine (300).

5. Dispositif magnétique (110) selon l'une quelconque des revendications précédentes, **caractérisé par** un organe d'amortissement (385), dans lequel l'organe d'amortissement (385) est disposé sur un coté du ressort (370) opposé à la bobine (300).

6. Dispositif magnétique (110) selon la revendication 4 et 5, **caractérisé en ce que** l'élément d'amortissement (380) présente une ouverture avec un diamètre intérieur, qui correspond à un diamètre extérieur de l'organe d'amortissement (385), ou dans lequel l'organe d'amortissement (385) présente une ouverture avec un diamètre intérieur, qui correspond à un diamètre extérieur de l'élément d'amortissement (380).

7. Dispositif magnétique (110) selon l'une quelconque des revendications précédentes, **caractérisé par** un élément de butée (365), qui est disposé sur un côté de la bobine (300) opposé au ressort (370), dans lequel l'élément de butée (365) est conçu pour limiter une course de déplacement de l'élément d'induit (330) à travers la bobine (300).

8. Dispositif magnétique (110) selon la revendication 7, **caractérisé en ce que** l'élément d'induit (330) présente une forme conique et l'élément de butée (365) présente une forme conique correspondant à la forme conique de l'élément d'induit (330).

9. Dispositif magnétique (110) selon l'une quelconque des revendications précédentes, **caractérisé en ce que** la bobine (300) est entourée au moins en partie par une armature en forme de U (305), en particulier dans lequel l'armature (305) est fabriquée au moins en partie en une tôle métallique.

10. Dispositif magnétique (110) selon la revendication 1, **caractérisé en ce que** l'élément de commutation (700) présente un contact Reed (395) et au moins un aimant permanent (390).

11. Dispositif magnétique (110) selon la revendication 10, **caractérisé en ce qu'**un élément conducteur de flux (710, 720) est disposé entre chaque fois une extrémité du contact Reed (395) et l'aimant permanent (390), en particulier dans lequel au moins un élément conducteur de flux (710) présente un ergot conducteur de flux (770) tourné vers l'autre élément conducteur de flux (720).

12. Levier de sélection de vitesse (120) avec un dispositif magnétique (110) selon l'une quelconque des revendications précédentes.

13. Procédé (1100) de production du dispositif magnétique (110) selon la revendication 1, dans lequel le procédé présente les étapes suivantes:
préparer (1110) la bobine (300), l'élément d'induit (330) et le ressort (370); et
disposer (1120) l'élément d'induit (330) dans la bobine (300), dans lequel on monte l'élément d'induit (330) de façon mobile dans la bobine (300) et dans lequel on dispose le ressort (370) à l'extérieur de la bobine (300), dans lequel on dispose le ressort (370) de façon à repousser l'élément d'induit (330) hors de la bobine (300).

14. Procédé (1200) pour faire fonctionner le dispositif magnétique (110) selon la revendication 1, dans lequel le procédé présente l'étape suivante:
alimenter (1210) la bobine (300) avec un courant d'activation, afin d'attirer l'élément d'induit (330) dans la bobine (300).
